# EUROPEAN PATENT SPECIFICATION

(11) **EP 3 550 547 B1**
(45) Date of publication and mention of the grant of the patent: **11.01.2023**
(21) Application number: 19170294.3
(22) Date of filing: 16.06.2015
(51) Int. Cl.: G06Q 30/02, G09F 9/00, G06Q 30/00

(54) **TRANSPARENT LCD ASSEMBLY WITH DISPLAY CASE**
TRANSPARENTE LCD-ANORDNUNG MIT SCHAUKASTEN
ENSEMBLE D'AFFICHAGE À CRISTAUX LIQUIDES TRANSPARENT DOTÉ D'UN BOÎTIER D'AFFICHAGE

(30) Priority: 16.06.2014 US 201462012785 P; 16.06.2014 US 201462012572 P; 16.06.2014 US 201462012559 P; 17.06.2014 US 201462013225 P; 18.06.2014 US 201462013917 P
(43) Date of publication of application: 09.10.2019
(62) Divisional of application: 15808941.7
(73) Proprietor: Manufacturing Resources International, Inc., Alpharetta, GA 30005 (US)
(72) Inventor: DUNN, William, Alpharetta, Georgia 30005 (US); DIAZ, Marcos, Alpharetta, Georgia 30005 (US)
(74) Representative: FRKelly

(56) References cited:
- US-A1- 2012 105 424
- US-A1- 2013 265 525
- US-A1- 2013 271 696

## Description

### Technical Field

Embodiments generally relate to cooling systems for transparent liquid crystal displays (LCD) and traditional LCDs.

### Background of the Art

Display cases are used in a number of different retail establishments for illustrating the products that are available for sale. In some instances these display cases may be coolers or freezers which are placed in grocery stores, convenience stores, gas stations, restaurants, or other retail establishments. In other instances these display cases may be non-refrigerated transparent containers used in a jewellery or watch store, bakery, deli, antique shop, sporting goods store, electronics store, or other retail establishments. While the design and appearance of the product itself does provide some point-of-sale (POS) advertising, it has been found that additional advertising at the POS can increase the awareness of a product and in turn create additional sales.

Most retail establishments already contain some POS advertising, and depending on the type of establishment the proprietor may want to limit the amount of 'clutter' in the retail area - resulting in a very limited space for additional POS advertising. It has now become desirable to utilize the transparent glass that is typically placed in display cases with additional POS advertising. Most notably, it has been considered that transparent LCDs may be positioned along with the transparent glass and could display additional advertising materials while still allowing a patron to view the products inside the display case. US2012/105424 and US 2013/271696 disclose known display cases.

### Summary of the Invention

According to the present invention there is provided a system for tracking and analyzing display case usage to determine the effectiveness of advertising content as claimed in claim 1.

An exemplary embodiment provides a cooling system for a transparent LCD assembly. LEDs are preferably arranged along the top and bottom edges of a two way light guide which permits the light to exit both the front and rear surface of the light guide. The top LEDs are preferably placed in thermal communication with a top thermal plate which is preferably placed in conductive thermal communication with the rear glass. Similarly, the bottom LEDs are preferably placed in thermal communication with a bottom thermal plate which is also placed in conductive thermal communication with the rear glass. The top and bottom thermal plates permit the heat to spread out and transfer to the rear glass where it can be removed by forced or natural convection. In some embodiments the light guide is permitted to move parallel to the LCD but is constrained from movement towards or away from the LCD, preferably by a front a rear bracket sandwiching the light guide.

An exemplary embodiment provides a system for tracking and analyzing display case usage. An exemplary display case contains a CPU and door sensor, as well as a connection to the internet or cellular network. Some display cases may also contain a temperature sensor. When the door is opened, an identifier for the image/video being currently shown is preferably stored at the CPU along with the date and time the door was opened. This data can be collected and transmitted via an internet/cellular network to an operations center having a CPU. In this way, the data can be analyzed to determine the traffic through the display case as well as the effectiveness of the images/videos being shown. By using the system and method described herein, the energy efficiency can be increased as well as the effectiveness of the advertisements.

The foregoing and other features and advantages of the present invention will be apparent from the following more detailed description of the particular embodiments, as illustrated in the accompanying drawings.

### Brief Description of the Drawings

A better understanding of an exemplary embodiment will be obtained from a reading of the following detailed description and the accompanying drawings wherein identical reference characters refer to identical parts and in which:
**FIGURE 1** is a perspective view of a display case having an exemplary sealed transparent LCD assembly.
**FIGURE 2** is a perspective view of the display case of Figure 1 where the door has been opened.
**FIGURE 3** is a perspective view of the sealed transparent LCD assembly of Figures 1-2.
**FIGURE 4** is a front planar view of the sealed transparent LCD assembly, showing the section lines A-A and B-B.
**FIGURE 5** is a section view taken along the section line A-A shown in Figure 4 and indicating Detail A and Detail B.
**FIGURE 6** is a section view taken along the section line B-B shown in Figure 4 and indicating Detail C.
**FIGURE 7** is a detailed section view of Detail A shown in Figure 5.
**FIGURE 8** is a detailed section view of Detail B shown in Figure 5.
**FIGURE 9** is a detailed section view of Detail C shown in Figure 6.
**FIGURE 10** is a perspective view of a partially assembled exemplary embodiment of a sealed transparent LCD assembly.
**FIGURE 11** is a simplified partial view of an exemplary embodiment of the lower thermal plate.
**FIGURE 12** is a simplified partial view of an exemplary embodiment of the upper thermal plate.
**FIGURE 13** is a perspective view of the refrigerated display case of Figure 1 showing the cavity for electronic devices as well as the location of Detail A.
**FIGURE 14** is a front view of Detail A shown in Figure 3.
**FIGURE 15** is a perspective view of the display case where a video is being shown on the transparent LCD.
**FIGURE 16** is a logic flow chart for operating the hardware and software within the display case.
**FIGURE 17** is a graphical representation of the data collected by the hardware and software described above.
**FIGURE 18** is an electrical schematic representation of an exemplary embodiment of the system for tracking and analyzing display case usage.
**FIGURE 19** is a logical flowchart that can be performed by the operations center and the computing devices utilized therein.

### Detailed Description

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/ or components, but do not preclude the presence or addition of one or more other features, integers, steps, operations, elements, components, and/or groups thereof.

Embodiments of the invention are described herein with reference to illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

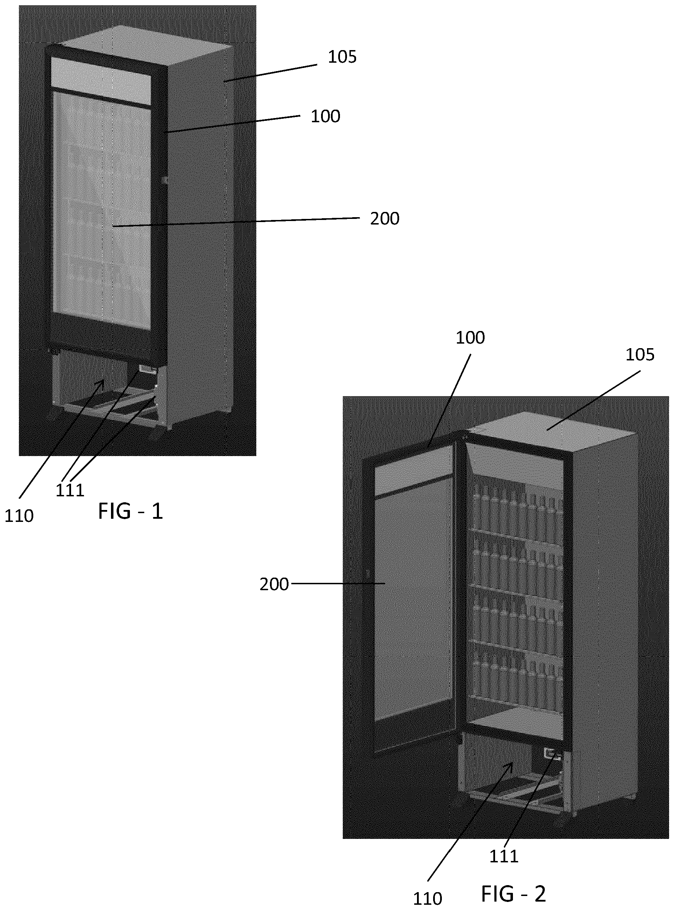

**FIGURE 1** is a perspective view of a display case having an exemplary sealed transparent LCD assembly 200. Generally, the display case includes a housing 105, to which a door frame assembly 100 is fastened. In this embodiment, a cavity 110 is provided below the door frame assembly 100 where various electronic devices 111 for operating the transparent LCD assembly 200 can be located. The electrical devices 111 may include any or all of the following: timing and control board (TCON), video player, hard drive/storage, microprocessor/CPU, wireless transmitter/receiver, cellular data transmitter/receiver, and internet connectivity. At least some of the electrical devices 111 are in electrical communication with the transparent LCD 230.

**FIGURE 2** is a perspective view of the display case of Figure 1 where the door has been opened.

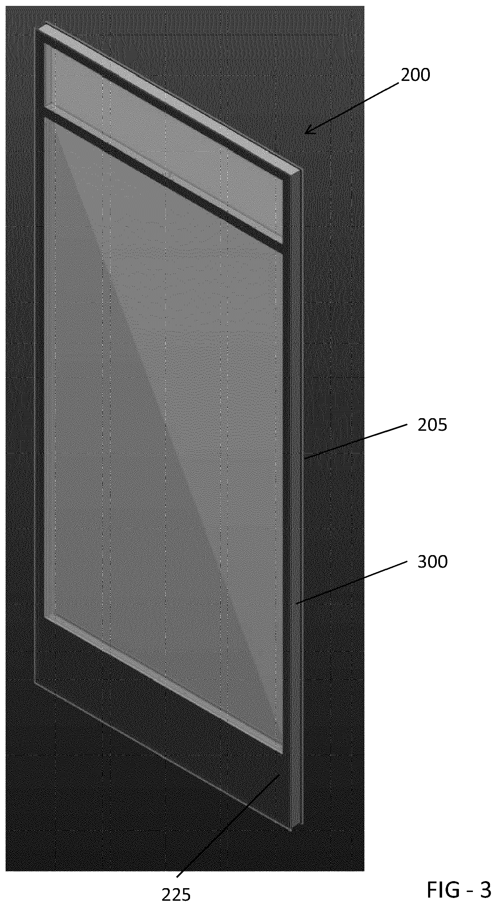

**FIGURE 3** is a perspective view of the sealed transparent LCD assembly 200 of Figures 1-2. Generally speaking, the assembly includes a spacer 300 which is sandwiched between a front glass 225 and rear glass 205. These components are preferably sealed together with an inert gas filling the sealed enclosure. Although not required for every embodiment, argon gas has been found to be preferred in the exemplary embodiments. For sealing these components together, it is preferable to use a hot melt polyurethane. Preferably, the spacer 300 is the Super Spacer@ Standard from Quanex in Cambridge, OH. www.quanex.com. In an exemplary embodiment, the spacer 300 would be a flexible foam that contains a desiccant and has a pressure sensitive acrylic adhesive on the front and back edges of the spacer which would be used to bond with the front and rear glass.

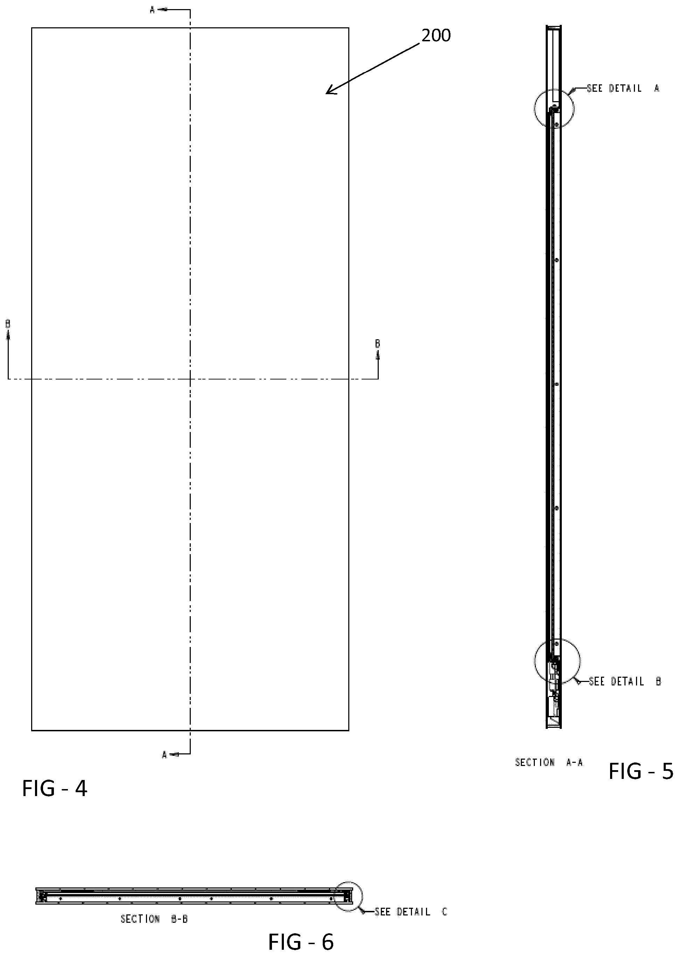

**FIGURE 4** is a front planar view of the sealed transparent LCD assembly, showing the section lines A-A and B-B. **FIGURE 5** is a section view taken along the section line A-A shown in Figure 4 and indicating Detail A and Detail B. **FIGURE 6** is a section view taken along the section line B-B shown in Figure 4 and indicating Detail C.

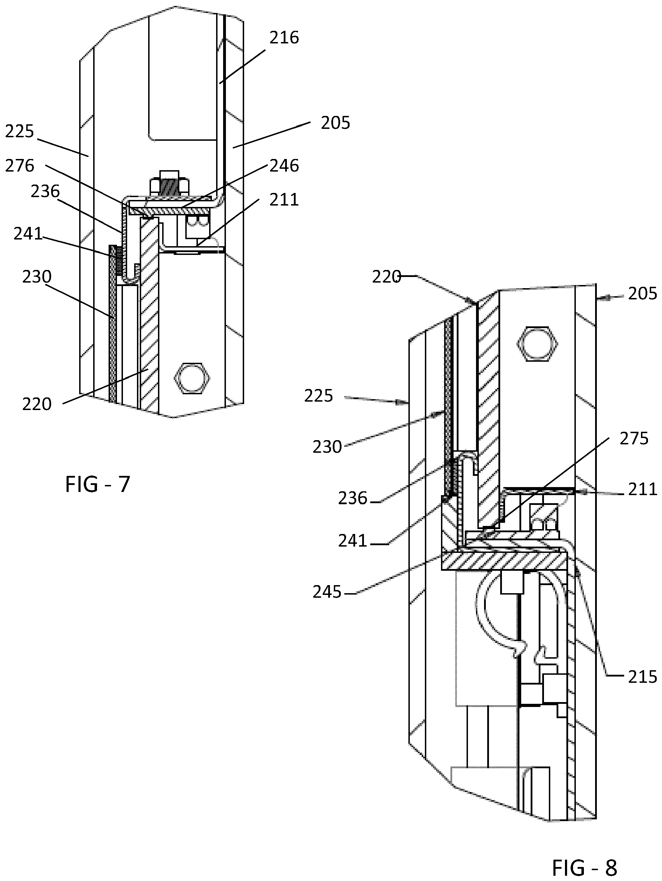

**FIGURE 7** is a detailed section view of Detail A shown in Figure 5. A top thermal plate 216 is preferably bonded to the rear glass 205. In an exemplary embodiment, the top thermal plate 216 is preferably bonded to the rear glass 205 through adhesive transfer tape. An exemplary adhesive transfer tape for this purpose would be 468 MP, available commercially from 3M^{™} of St. Paul, MN. www.3M.com/converter. A printed circuit board (PCB) 246 containing a plurality of LEDs 276 is preferably attached to the top thermal plate 216 and is preferably in conductive thermal communication with the top thermal plate 216 as well. In this way, heat that is generated by the LEDs 276 can be transmitted to the PCB 246, top thermal plate 216, and eventually transferring to the rear glass 205 where the heat can dissipate through natural or forced convection.

The LEDs 276 are placed adjacent to the edge of a light guide 220 which is sandwiched between a rear bracket 211 and a front bracket 236. Generally speaking, the light guide 220 is only constrained from movement towards the front or back of the assembly, but is not constrained from movement towards the top or sides of the assembly. In other words, the light guide 220 is secured such that it is capable of thermal expansion/contraction in the X-Y direction (horizontal and vertical when observing the LCD), but is fixed in the Z direction (into/out of the assembly when observing the LCD). It could also be said that the light guide 220 is constrained so that it cannot move towards the front or rear glass but otherwise is permitted to float between the rear bracket 211 and front bracket 236. In an exemplary embodiment, the light guide 220 would be the Acrylite^{®} LED Endlighten product available from Evonik Industries. www.acrylite-shop.com.

Preferably, the light guide 220 would contain microscopic diffuse particulate that is homogeneously scattered throughout the sheet. Also preferably, the light emitted from the LEDs 276 and 275 is permitted to exit both the front and rear surfaces of the light guide 220 (in this way, the light guide 220 could be referred to as a 'two way light guide'). In an exemplary embodiment, the light is permitted to exit the rear of the light guide 220 so as to illuminate the products within the display case. Thus, it is preferable that the amount of light permitted to exit the rear surface of the light guide 220 is at least 20% of the amount of light permitted to exit the front surface of the light guide 220.

The transparent LCD 230 is preferably attached to a front surface of the front bracket 236 through a layer of adhesive 241 which would preferably be applied around the perimeter of the LCD 230. In an exemplary embodiment, the adhesive 241 would be VHB tape and preferably 5052 VHB Tape available commercially from 3M^{™} of St. Paul, MN. www.3M.com.

**FIGURE 8** is a detailed section view of Detail B shown in Figure 5. A bottom thermal plate 215 is preferably bonded to the rear glass 205. In an exemplary embodiment, the bottom thermal plate 215 is preferably bonded to the rear glass 205 through adhesive transfer tape. An exemplary adhesive transfer tape for this purpose would be 468 MP, available commercially from 3M^{™} of St. Paul, MN. www.3M.com/converter. A printed circuit board (PCB) 245 containing a plurality of LEDs 275 is preferably attached to the bottom thermal plate 215 and is preferably in conductive thermal communication with the bottom thermal plate 215 as well. In this way, heat that is generated by the LEDs 275 can be transmitted to the PCB 245, bottom thermal plate 215, and eventually transferring to the rear glass 205 where the heat can dissipate through natural or forced convection.

The LEDs 275 are placed adjacent to the edge of a light guide 220 which is sandwiched between a rear bracket 211 and a front bracket 236. As discussed at length above, the light guide 220 is preferably only constrained from movement towards the front or back of the assembly, but is not contained from movement towards the top or sides of the assembly.

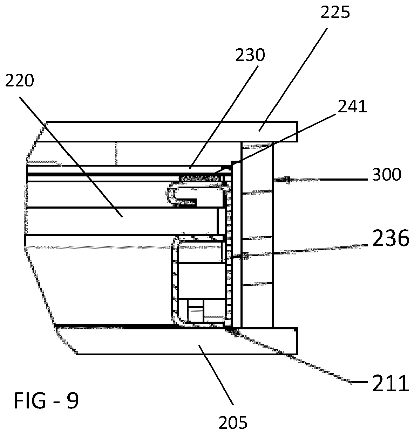

**FIGURE 9** is a detailed section view of Detail C shown in Figure 6.

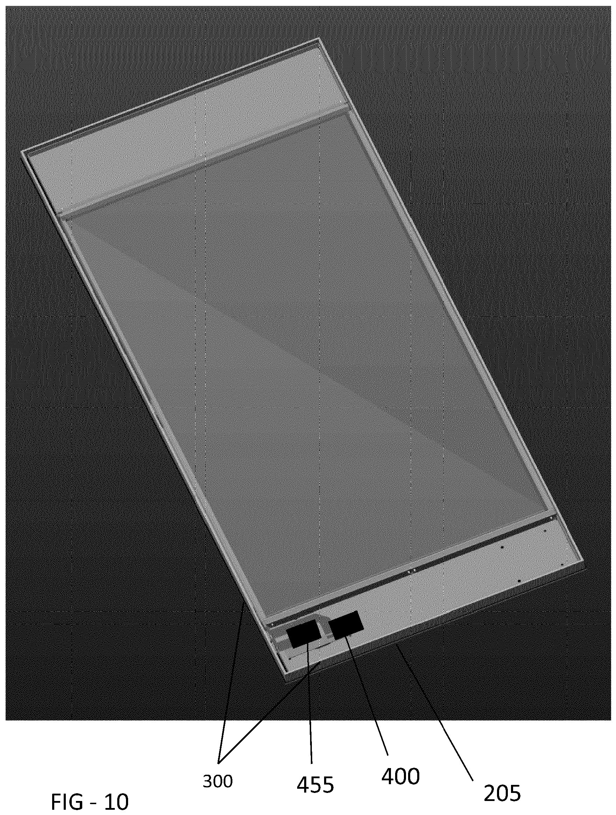

**FIGURE 10** is a perspective view of a partially assembled exemplary embodiment of a sealed transparent LCD assembly. Here, the front glass 225 has been removed to show the interior of the sealed assembly 200. This view shows the rear glass 205 with the spacer 300 attached around the perimeter of the glass 205. The various electronic devices 400 as well as the second wireless transmitter/receiver 455 are shown attached to the bottom plate 215 and sealed between the rear glass 205 and front glass 225 (not shown here). Also shown is the rear bracket 211 which may be attached to the rear glass 205 as well.

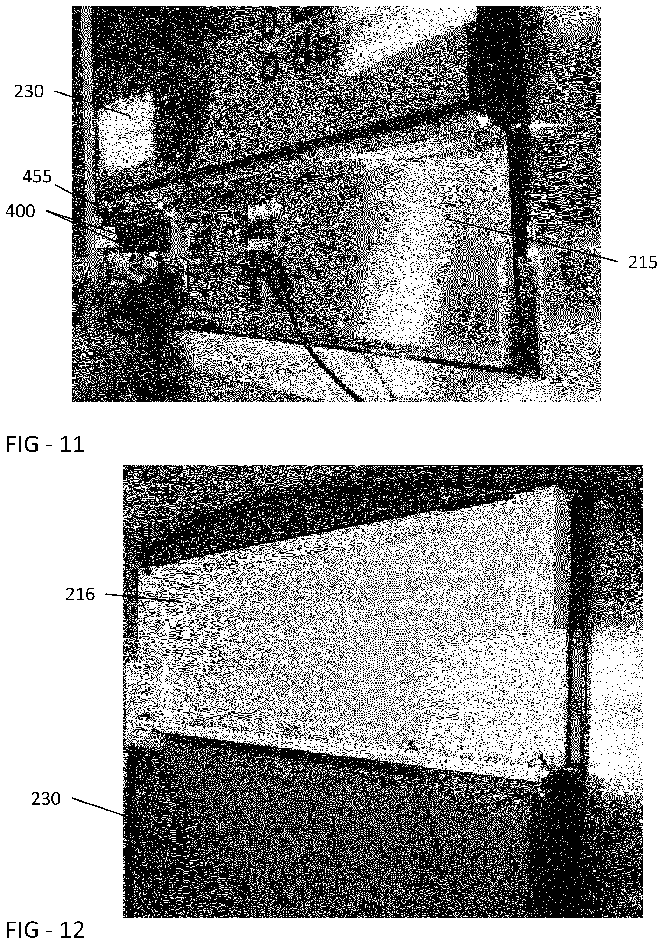

**FIGURE 11** is a simplified partial view of an exemplary embodiment of the lower thermal plate 215. In a preferred embodiment, the lower thermal plate 215 would extend horizontally as far as possible, preferably to the same horizontal width as the LCD 230 and may extend 4-14 inches in vertical width, depending on the application. In this embodiment, electrical devices 400 are mounted to the thermal plate 215 and can include, but are not limited to: power modules, wireless or satellite receiver/transmitter, video player, hard drive, microprocessor, and printed circuit boards. Although shown attached to the lower thermal plate 215, electrical devices 400 could also be mounted to the upper thermal plate 216. Preferably, the electrical devices 400 are also in conductive thermal communication with the thermal plate 215/216 so that heat which is generated by the electrical devices 400 can be transferred to the thermal plate 215/216 and eventually to the rear glass 205, where it can be removed by natural or forced convection.

A second wireless transmitter/receiver 455 is also preferably positioned on the lower mounting plate 215 and may communicate electronically with the wireless transmitter/receiver 450 shown within the cavity 110. A plurality of different signals can be transmitted between the two wireless devices 450/455 including but not limited to: image/video data, identifying data for the content being displayed on the LCD, visual alerts, image inspection/test patterns, temperature of the display case, and feedback data from the LCD 200 such as brightness, color saturation, color temperature, gamma, and contrast ratio.

**FIGURE 12** is a simplified partial view of an exemplary embodiment of the upper thermal plate. Again, in a preferred embodiment, the upper thermal plate 216 would extend horizontally as far as possible, preferably to the same horizontal width as the LCD 230. The upper thermal plate 216 may also extend 4-14 inches in vertical width, depending on the application. While not required, it is also preferred that the lower thermal plate 215 and the upper thermal plate 216 are within 15% of the same surface area. In other words, it is preferred that the plates 215/216 are substantially the same surface area. This is not required, however, as some embodiments may require a larger surface area for the plate which would contain the electrical devices 400, or a larger surface area for the top plate 216 as compared to the bottom plate 215. It is preferred that the thermal plates are both metallic, and most preferably aluminum, but they can be any material that has good thermal conductivity.

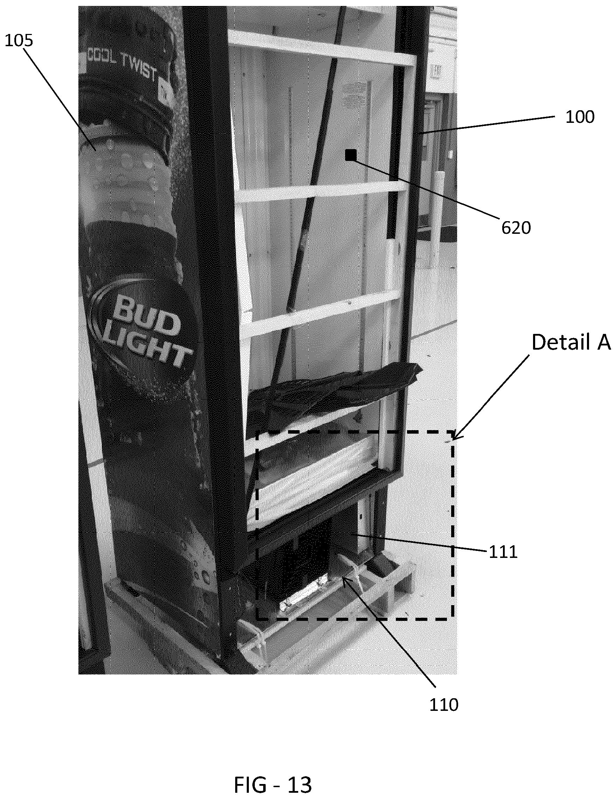

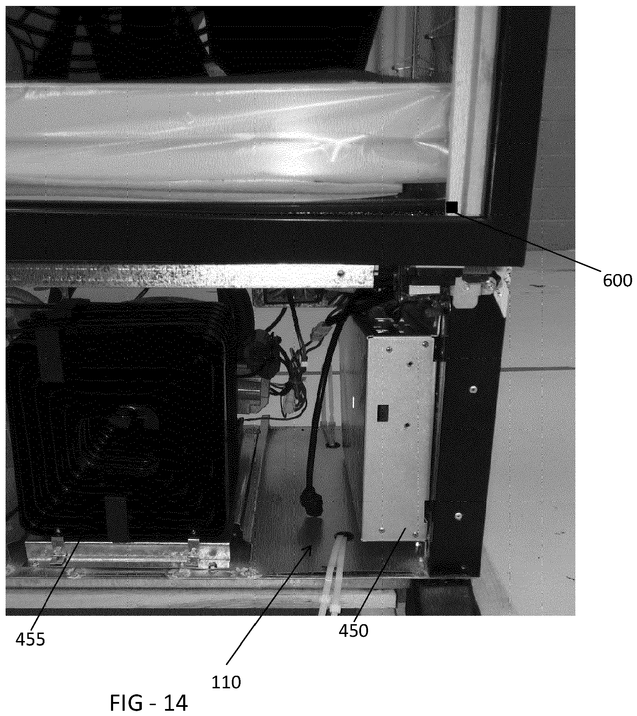

**FIGURE 13** is a perspective view of the refrigerated display case of Figure 1 showing the cavity for electronic devices as well as the location of Detail A. Also shown in this figure is the temperature sensor 620 which is in electrical communication with the CPU 455. The term CPU as used herein would preferably contain a microprocessor capable of executing software logic along with RAM storage as well as hard drive electronic storage. **FIGURE 14** is a front view of Detail A shown in Figure 3. Here, a wireless transmitter/receiver 450 is shown within the cavity 110 as well as a CPU 455. Also shown here is a door sensor 600 which is positioned to determine whether the door is currently open or not. The door sensor 600 is preferably in electrical communication with the CPU 455, which contains an electrical connection to either an internet or satellite network.

The wireless devices 450/455 can operate under any form of wireless networking technology, including but not limited to: WPAN, WLAN, a wireless mesh network, or GAN. Specifically regarding the architecture for a WLAN network, these could include but are not limited to stations, basic service set, extended service set, and a distribution system. Further regarding the types of wireless LANs, these could include but are not limited to peer-to-peer, bridge, and a wireless distribution system. Any form of general encryption method can be used with the exemplary embodiments herein.

The embodiments of the wireless communication and transparent LCD system described herein can be used with any number of display case designs, either temperature controlled or not, and with doors that open or glass that remains stationary. Although shown here with a transparent LCD, the wireless system could be used with a traditional backlit LCD as well.

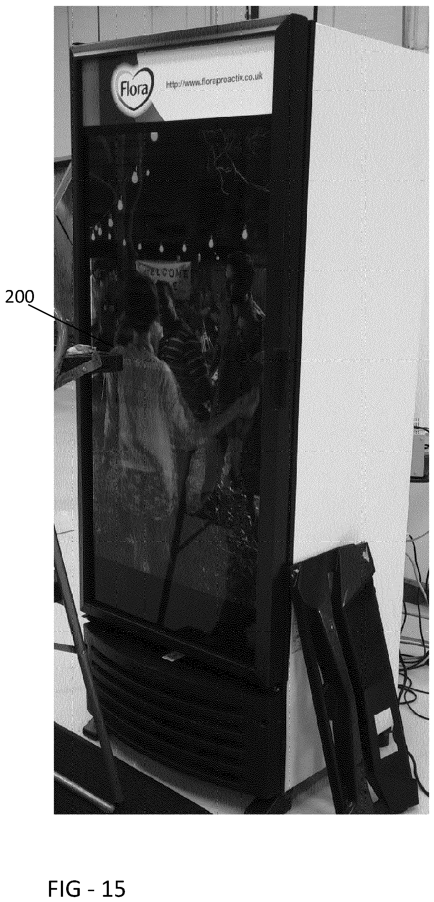

**FIGURE 15** is a perspective view of the display case where a video is being shown on the transparent LCD 200.

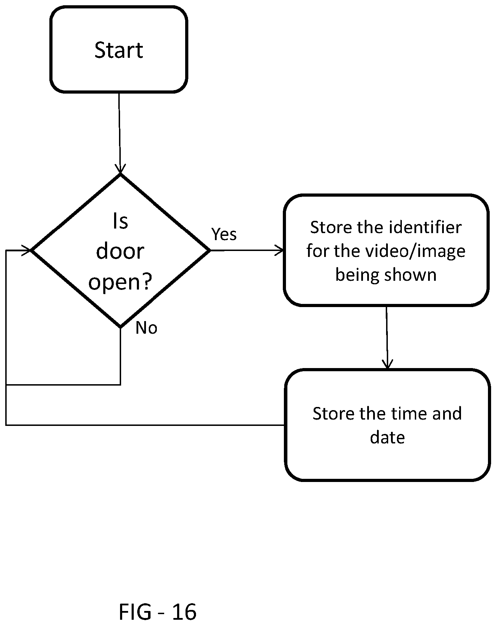

**FIGURE 16** is a logic flow chart for operating the hardware and software within the display case, specifically the CPU 455 and door sensor 600. By operating with this logic, the date/time as well as an identifier for the particular video/image being shown can be stored.

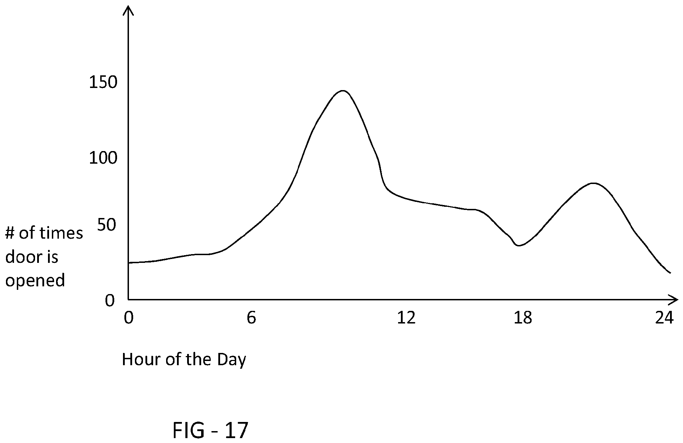

**FIGURE 17** is a graphical representation of the data collected by the hardware and software described above. Once the data is collected, low traffic and high traffic throughout the day can be analyzed. This traffic data can be useful in many ways. For example, it may be determined that it is preferred to hold the temperature of the display case at 32 degrees F when the door is opened more than 100 times per hour, but only 35 degrees F when the door is opened less than 50 times per hour. In this way, the usage rate and temperature of the display case can be correlated in order to save energy costs. For example, we know that we can now raise the temperature of the display case to 35 degrees F from hours 0-6, 18, and 23-24 without risking damage to the contents. This requires less energy and can provide enormous cost savings when used for thousands of display cases.

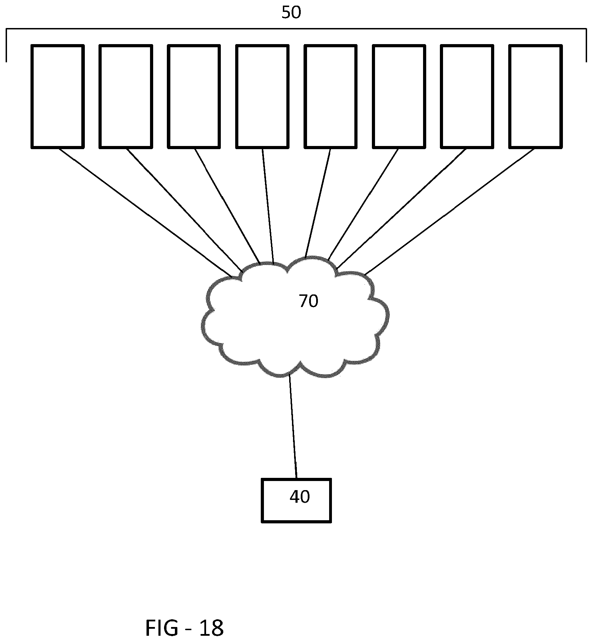

**FIGURE 18** is an electrical schematic representation of an exemplary embodiment of the system for tracking and analyzing display case usage. Here, a plurality of display cases 50 are in communication with an internet/cellular network 70. Here, an operations center contains at least one CPU 40 which can communicate with the plurality of display cases 50 through the internet/cellular network 70. Generally speaking, if the internet/cellular network 70 is only internet, the CPU 455 and CPU 40 should each have some type of modem. Also generally speaking, if the internet/cellular network 70 is only cellular, the CPU 455 and CPU 40 should each have some type of cellular transmitter/receiver, and preferably a 4G cellular transmitter/receiver.

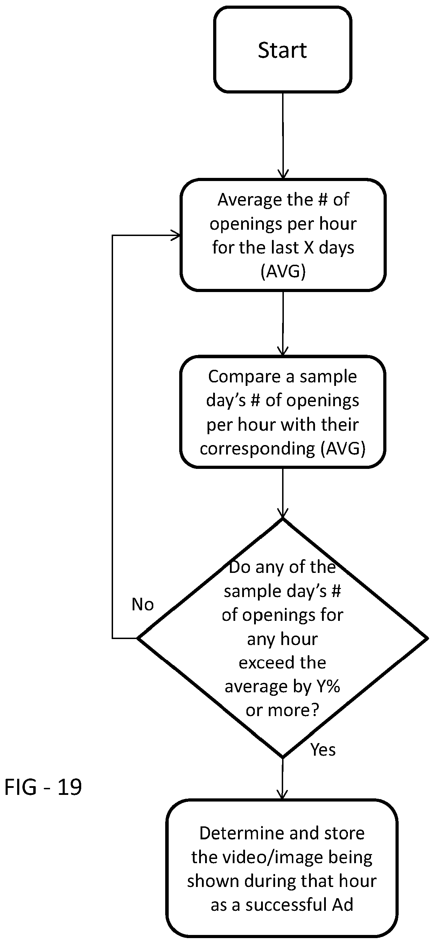

**FIGURE 19** is a logical flowchart that can be performed by the operations center and the computing devices utilized therein. Initially, the number of door openings per hour for each day can be averaged over the last X days (where X could be any number of days) to get an hourly average (AVG). Then, the number of openings per hour for any sample day can be compared with their corresponding AVG for that hour. Next, the logic can determine if the openings during any of the hours during the sample day exceed the hourly average by Y% or more (where Y can be set at any significant percentage depending on the data, but generally should be 15% or higher). If so, the identifier for the video/image being shown during that time is stored as a successful advertisement. In this way, advertisements that appear to create the most traffic within the cooler can be tracked or recorded so that these advertisements can be shown more often or so that future advertisements can be designed around the successful advertisements of the past. This provides the content providers with an unprecedented amount of control over their advertising, and specifically the effectiveness of their advertising.

It should be noted that although the above embodiments deal mostly with the number of door openings per hour this could be performed by the number of openings during any time interval, either in minutes, hours, full days, or any combination. The system could also be used to determine the number of openings during each video segment, average these values (optionally), standardize the averages based on how long the video's were to obtain a number of openings per second/minute, and/or determine which videos created the highest number of openings.

The embodiments of the cooling system described herein can be used with any number of display case designs, either temperature controlled or not, and with doors that open, or glass that remains stationary. Although shown here with a transparent LCD, the cooling system could be used with a traditional backlit LCD as well.

## Claims

1. A system for tracking and analysing display case usage to determine the effectiveness of advertising content, the system comprising:
a display case (50) having a door capable of movement between an opened position, whereby a plurality of consumer products stored in the display case (50) may be accessed, and a closed position, whereby the display case (50) is substantially sealed;
a transparent electronic display (200) housed within the door and configured to display a variety of advertising content;
a sensor (600) configured to detect whether the door is in the opened position; and
a CPU (455) electrically connected to the transparent electronic display and the sensor, **characterised in that** the CPU (455) is configured to receive data from the sensor (600) indicating whether the door is in the opened position and data from the transparent electronic display (200) representing the advertising content displayed on the transparent electronic display (200) when the sensor (600) indicates that the door is in the opened position and store the data from the transparent electronic display (200) as an effective advertisement where the data from the sensor (600) indicates that the door was placed in the opened position while the advertising content was displayed on the transparent electronic display (200) an average number of times during a period of time exceeding a target number by at least a predetermined amount.

2. The system of claim 1 wherein:
the sensor (600) is positioned between the door and the remainder of the display case (50).

3. The system of any of claims 1-2 wherein:
the transparent electronic display (200) is a liquid crystal display (LCD).

4. The system of any of claims 1-3 wherein:
said door comprises a front glass (225) and a rear glass (205); and
the transparent electronic display (200) is located between the front glass (255) and
the rear glass (205).

5. The system of any of claims 1-4 wherein:
the CPU (455) is in electrical communication with a network and is configured to transmit the data from the sensor (600) indicating whether the door is in the opened position as well as the data from the transparent electronic display (200) representing the advertising content displayed on the transparent electronic display (200) when the sensor (600) indicates that the door is in the opened position to a remote location.

6. The system of claim 5 wherein:
the display case (50) further comprises a first cavity and a second cavity (110);
the first cavity is refrigerated and is configured to store the plurality of consumer products; and
the second cavity (110) is not refrigerated and is configured to store a wireless transmitter/receiver (111), wherein said wireless transmitter/receiver (111) is configured to facilitate communication between the CPU (455) and the remote location by way of the network.

7. The system of claim 6 further comprising:
a temperature sensor (620) located in the first cavity and placed in electrical communication with the CPU (455).

8. The system of any of claims 5-7 wherein:
the CPU (455) is configured to:
store data regarding a time and date when the sensor (600) detects that the door is in the opened position for determining the average number of times the door is placed in the opened position during the period of time.

## Patentansprüche

1. System zum Verfolgen und Analysieren von Schaukastennutzung, um die Wirksamkeit von Werbeeinhalt zu bestimmen, wobei das System Folgendes umfasst:
einen Schaukasten (50) mit einer Tür, die zur Bewegung zwischen einer geöffneten Stellung, in der auf eine Vielzahl von in dem Schaukasten (50) ausgestellten Konsumprodukten zugegriffen werden kann, und einer geschlossenen Stellung, in der der Schaukasten (50) im Wesentlichen verschlossen ist, fähig ist;
ein durchsichtiges elektronisches Display (200), das innerhalb der Tür untergebracht ist und dazu konfiguriert ist, verschiedenen Werbeinhalt anzuzeigen;
einen Sensor (600), der dazu konfiguriert ist, zu erkennen, ob sich die Tür in der geöffneten Stellung befindet; und
eine CPU (455), die mit dem durchsichtigen elektronischen Display und dem Sensor elektrisch verbunden ist, **dadurch gekennzeichnet, dass** die CPU (455) dazu konfiguriert ist, Folgendes zu empfangen: Daten von dem Sensor (600), die angeben, ob sich die Tür in der geöffneten Stellung befindet, und Daten von dem durchsichtigen elektronischen Display (200), die den auf dem durchsichtigen elektronischen Display angezeigten Werbeeinhalt repräsentieren, wenn der Sensor (600) angibt, dass sich die Tür in der geöffneten Stellung befindet, und die Daten von dem durchsichtigen elektronischen Display (200) als wirksame Werbung zu speichern, wenn die Daten von dem Sensor (600) angeben, dass die Tür eine durchschnittliche Anzahl von Malen, die eine Zielanzahl um mindestens einen vorgegebenen Betrag überschreitet, während eines Zeitraums in die geöffnete Stellung gestellt wurde, während der Werbeinhalt auf dem durchsichtigen elektronischen Display (200) angezeigt wurde.

2. System nach Anspruch 1, wobei:
der Sensor (600) zwischen der Tür und dem Rest des Schaukastens (50) positioniert ist.

3. System nach einem der Ansprüche 1-2, wobei:
es sich bei dem durchsichtigen elektronischen Display (200) um ein Flüssigkristalldisplay (LCD) handelt.

4. System nach einem der Ansprüche 1-3, wobei:
die Tür eine vordere Glasscheibe (225) und eine hintere Glasscheibe (205) umfasst; und
sich das durchsichtige elektronische Display (200) zwischen der vorderen Glasscheibe (255) und der hinteren Glasscheibe (205) befindet.

5. System nach einem der Ansprüche 1-4, wobei:
die CPU (455) mit einem Netzwerk in elektrischer Verbindung steht und dazu konfiguriert ist, die Daten von dem Sensor (600), die angeben, ob sich die Tür in der geöffneten Stellung befindet, sowie die den auf dem durchsichtigen elektronischen Display (200) angezeigten Werbeinhalt repräsentierenden Daten von dem durchsichtigen elektronischen Display (200), wenn der Sensor (600) angibt, dass sich die Tür in der geöffneten Stellung befindet, an einen abgesetzten Ort zu übertragen.

6. System nach Anspruch 5, wobei:
der Schaukasten (50) ferner eine erste Kammer und eine zweite Kammer (110) umfasst;
die erste Kammer gekühlt ist und dazu konfiguriert ist, die Vielzahl von Konsumprodukten aufzubewahren; und
die zweite Kammer (110) nicht gekühlt ist und dazu konfiguriert ist, einen Drahtlos-Sende-Empfänger (111) aufzubewahren, wobei der Drahtlos-Sende-Empfänger (111) dazu konfiguriert ist, die Kommunikation zwischen der CPU (455) und dem abgesetzten Ort über das Netzwerk zu ermöglichen.

7. System nach Anspruch 6, das ferner Folgendes umfasst:
einen Temperatursensor (620), der sich in der ersten Kammer befindet und in elektrische Verbindung mit der CPU (455) gestellt ist.

8. System nach einem der Ansprüche 5-7, wobei:
die CPU (455) dazu konfiguriert ist:
Daten über eine Zeit und ein Datum zu speichern, zu denen der Sensor (600) erkennt, dass sich die Tür in der geöffneten Stellung befindet, um die durchschnittliche Anzahl Male zu bestimmen, die die Tür während des Zeitraums in die geöffnete Stellung gestellt wird.

## Revendications

1. Système de suivi et d'analyse de l'utilisation de vitrines pour déterminer l'efficacité de contenus publicitaires, le système comprenant :
une vitrine (50) munie d'une porte capable de se déplacer entre une position ouverte, permettant l'accès à une pluralité de produits de consommation stockés dans la vitrine (50), et une position fermée, scellant sensiblement la vitrine (50) ;
un afficheur électronique transparent (200) logé à l'intérieur de la porte et configuré pour afficher une variété de contenus publicitaires ;
un capteur (600) configuré pour détecter que la porte est ou non dans la position ouverte ; et
une unité centrale de traitement CPU (455) connectée électriquement à l'afficheur électronique transparent et au capteur, **caractérisé en ce que** la CPU (455) est configurée pour recevoir à partir du capteur (600) des données indiquant que la porte est ou non dans la position ouverte et à partir de l'afficheur électronique transparent (200) des données représentant le contenu publicitaire affiché sur l'afficheur électronique transparent (200) quand le capteur (600) indique que la porte est dans la position ouverte et stocker les données provenant de l'afficheur électronique transparent (200) en tant que publicité efficace quand les données provenant du capteur (600) indiquent que la porte a été placée dans la position ouverte alors que le contenu publicitaire était affiché sur l'afficheur électronique transparent (200) un nombre moyen de fois au cours d'une période dépassant un nombre cible par au moins un nombre prédéterminé.

2. Système selon la revendication 1 dans lequel :
le capteur (600) est placé entre la porte et le reste de la vitrine (50).

3. Système selon l'une quelconque des revendications 1-2 dans lequel :
l'afficheur électronique transparent (200) est un afficheur à cristaux liquides (LCD).

4. Système selon l'une quelconque des revendications 1 à 3 dans lequel :
ladite porte comprend une vitre avant (225) et une vitre arrière (205) ; et
l'afficheur électronique transparent (200) est situé entre la vitre avant (255) et la vitre arrière (205).

5. Système selon l'une quelconque des revendications 1 à 4 dans lequel :
la CPU (455) est en communication électrique avec un réseau et est configurée pour transmettre à un site distant les données provenant du capteur (600) indiquant que la porte est ou non dans la position ouverte ainsi que les données provenant de l'afficheur électronique transparent (200) représentant le contenu publicitaire affiché sur l'afficheur électronique transparent (200) quand le capteur (600) indique que la porte est dans la position ouverte.

6. Système selon la revendication 5 dans lequel :
la vitrine (50) comprend en outre une première cavité et une seconde cavité (110) ;
la première cavité est réfrigérée et est configurée pour stocker la pluralité de produits de consommation ; et
la deuxième cavité (110) n'est pas réfrigérée et est configurée pour stocker un émetteur/récepteur sans fil (111), ledit émetteur/récepteur sans fil (111) étant configuré pour faciliter la communication entre la CPU (455) et le site distant au moyen du réseau.

7. Système selon la revendication 6 comprenant en outre :
un capteur de température (620) situé dans la première cavité et placé en communication électrique avec la CPU (455).

8. Système selon l'une quelconque des revendications 5 à 7 dans lequel :
la CPU (455) est configurée pour :
stocker des données concernant une heure et une date auxquelles le capteur (600) détecte que la porte est dans la position ouverte pour déterminer le nombre moyen de fois que la porte est placée dans la position ouverte durant la période de temps.
